# EUROPEAN PATENT SPECIFICATION

(11) **EP 4 538 687 B1**
(45) Date of publication and mention of the grant of the patent: **22.04.2026**
(21) Application number: 23819551.5
(22) Date of filing: 08.05.2023
(51) Int. Cl.: G01N 23/18, G06V 10/774, G06V 10/764

(54) **DATA PROCESSING DEVICE, DATA PROCESSING METHOD, AND PROGRAM**
DATENVERARBEITUNGSVORRICHTUNG, DATENVERARBEITUNGSVERFAHREN UND PROGRAMM
DISPOSITIF DE TRAITEMENT DE DONNÉES, PROCÉDÉ DE TRAITEMENT DE DONNÉES ET PROGRAMME

(30) Priority: 07.06.2022 JP 2022092152
(43) Date of publication of application: 16.04.2025
(73) Proprietor: FUJIFILM Corporation, Tokyo 106-8620 (JP)
(72) Inventor: IKEDA, Haruka, Tokyo 106-8620 (JP)
(74) Representative: Meissner Bolte Partnerschaft mbB
(86) International application number: PCT/JP2023/017249
(87) International publication number: WO 2023/238565

(56) References cited:
- DE-A1- 102023 101 714
- DE-T5- 112022 000 080
- JP-A- 2020 102 111
- JP-A- 2020 169 680
- JP-A- 2021 033 835
- JP-A- 2021 110 753
- JP-A- 2021 110 753
- RONNEBERGER OLAF ET AL: "U-Net: Convolutional Networks for Biomedical Image Segmentation", 18 November 2015, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 234 - 241, ISBN: 978-3-540-74549-5, XP047331005
- ANONYMOUS: "CT scan", WIKIPEDIA, 2 June 2022 (2022-06-02), pages 1 - 15, XP093288146, Retrieved from the Internet <URL:https://en.wikipedia.org/w/index.php?title=CT_scan&oldid=1091126253> [retrieved on 20250618]

## Description

### BACKGROUND OF THE INVENTION

### 1. Field of the Invention

The present invention relates to a data processing apparatus, a data processing method, and a program, and more particularly to a data processing apparatus, a data processing method, and a program for generating a labeled training dataset.

### 2. Description of the Related Art

Machine learning generally involves an issue of a shortage of labeled training datasets relative to the complexity of a problem to be solved. Accordingly, to obtain as many diverse labeled training datasets as possible from a small number of labeled training datasets, data augmentation is performed on existing labeled training datasets to newly generate labeled training datasets. Here, a labeled training dataset is constituted by training data which a learning model learns and a ground truth label indicating a ground truth for the training data.

For example, JP2021-110753A describes generating several hundred thousand datasets by performing data augmentation on transmission X-ray images.

### SUMMARY OF THE INVENTION

The invention is set out in the independent claims.

An embodiment according to a technique of the present disclosure provides a data processing apparatus, a data processing method, and a program for generating, by data augmentation, a labeled training dataset with which a learning model can perform effective learning.

A data processing apparatus according to a first aspect of the present invention is a data processing apparatus including a processor configured to: generate an inverted image obtained by inverting pixel values of a single-channel image that constitutes a first labeled training dataset, as training data of a second labeled training dataset obtained by augmentation of the first labeled training dataset, the single-channel image being an image of which the pixel values are determined in accordance with a physical quantity sensed by light-receiving elements during imaging or an image of which the pixel values are determined by reversible transform on the physical quantity; and generate an inverted label corresponding to the inverted image, as a ground truth label that constitutes the second labeled training dataset, the inverted label being generated based on a ground truth label of the single-channel image, the ground truth label of the single-channel image constituting the first labeled training dataset.

A data processing apparatus according to a second aspect of the present invention is the data processing apparatus according to the first aspect, in which, preferably, the single-channel image is an image captured by a digital detector array (DDA) that receives radiation transmitted through a photographic subject or a computed radiography (CR) captured image obtained by causing a reading device to output, as digital values, a received light signal from an imaging plate (IP).

A data processing apparatus according to a third aspect of the present invention is the data processing apparatus according to the first or second aspect, in which, preferably, the single-channel image is an image obtained by lens-free imaging.

A data processing apparatus according to a fourth aspect of the present invention is the data processing apparatus according to any one of the first to third aspects in which, preferably, each pixel of the single-channel image has a digital value proportional to an amount of received light at a corresponding light-receiving element among the light-receiving elements or a digital value correlated with the amount of received light.

A data processing apparatus according to a fifth aspect of the present invention is the data processing apparatus according to any one of the first to fourth aspects in which, preferably, each pixel of the single-channel image has a digital value correlated with the physical quantity at a corresponding point of a photographic subject.

A data processing apparatus according to a sixth aspect of the present invention is the data processing apparatus according to any one of the first to fifth aspects in which, preferably, the first labeled training dataset is selected such that in a case where the first labeled training dataset is augmented, the inverted label does not cause any contradiction.

A data processing apparatus according to a seventh aspect of the present invention is the data processing apparatus according to any one of the first to sixth aspects in which, preferably, the first labeled training dataset is selected such that in a case where the first labeled training dataset is augmented, the inverted label is effective for learning.

A data processing apparatus according to an eighth aspect of the present invention is the data processing apparatus according to any one of the first to seventh aspects in which, preferably, the processor is configured to: generate the inverted image by inverting the pixel values of a partial region of the single-channel image; and generate the inverted label as the ground truth label that constitutes the second labeled training dataset, based on a ground truth label of the single-channel image corresponding to the partial region.

A data processing apparatus according to a ninth aspect of the present invention is the data processing apparatus according to any one of the first to eighth aspects in which, preferably, the processor is configured to perform normalization or standardization on the training data.

A data processing apparatus according to a tenth aspect of the present invention is the data processing apparatus according to any one of the first to ninth aspects in which, preferably, the processor is configured to edit a class design of the ground truth label that constitutes the second labeled training dataset in response to setting the inverted image as the training data.

A data processing apparatus according to an eleventh aspect of the present invention is the data processing apparatus according to any one of the first to tenth aspects in which, preferably, the reversible transformation is at least one of linear transformation, logarithmic transformation, or non-linear transformation using a pixel value correspondence table.

A data processing method according to a twelfth aspect of the present invention includes: performing, by a processor, a step of generating an inverted image obtained by inverting pixel values of a single-channel image that constitutes a first labeled training dataset, as training data of a second labeled training dataset obtained by augmentation of the first labeled training dataset, the single-channel image being an image of which the pixel values are determined in accordance with a physical quantity sensed by light-receiving elements during imaging or an image of which the pixel values are determined by reversible transform on the physical quantity; and a step of generating an inverted label corresponding to the inverted image, as a ground truth label that constitutes the second labeled training dataset, the inverted label being generated based on a ground truth label of the single-channel image, the ground truth label of the single-channel image constituting the first labeled training dataset.

A program according to a thirteenth aspect of the present invention causes a processor to execute a data processing method including: a step of generating an inverted image obtained by inverting pixel values of a single-channel image that constitutes a first labeled training dataset, as training data that constitutes a second labeled training dataset obtained by augmentation of the first labeled training dataset, the single-channel image being an image of which the pixel values are determined in accordance with a physical quantity sensed by light-receiving elements during imaging or an image of which the pixel values are determined by reversible transform on the physical quantity; and a step of generating an inverted label corresponding to the inverted image, as a ground truth label that constitutes the second labeled training dataset, the inverted label being generated based on a ground truth label of the single-channel image, the ground truth label of the single-channel image constituting the first labeled training dataset.

According to the present invention, a labeled training dataset with which a learning model can perform effective learning can be generated from an existing labeled training dataset by data augmentation.

### BRIEF DESCRIPTION OF THE DRAWINGS

Fig. 1 is a block diagram illustrating an example of a hardware configuration of a data processing apparatus;
Fig. 2 is a diagram illustrating functional blocks of functions F implemented by a processor executing a data processing program stored in a memory;
Fig. 3 is a schematic diagram for describing capturing of a single-channel image;
Fig. 4 is a diagram illustrating the single-channel image;
Fig. 5 is a diagram for describing class replacement processing for a ground truth label;
Fig. 6 is a diagram for describing class replacement processing for a ground truth label;
Figs. 7A and 7B are diagrams for describing editing of a class design of a ground truth label (inverted label) of a second labeled training dataset;
Fig. 8 is a diagram for describing a specific example of a first labeled training dataset and second labeled training dataset;
Fig. 9 is a flowchart for describing a data processing method;
Figs. 10A and 10B are diagrams illustrating pixel values constituting an image;
Fig. 11 is a diagram for describing a first labeled training dataset and a second labeled training dataset according to a third embodiment; and
Fig. 12 is a block diagram schematically illustrating an example of a configuration of an imaging system.

### DESCRIPTION OF THE PREFERRED EMBODIMENTS

Preferred embodiments of the present invention will be described below with reference to the accompanying drawings.

### First Embodiment

### Data Processing Apparatus

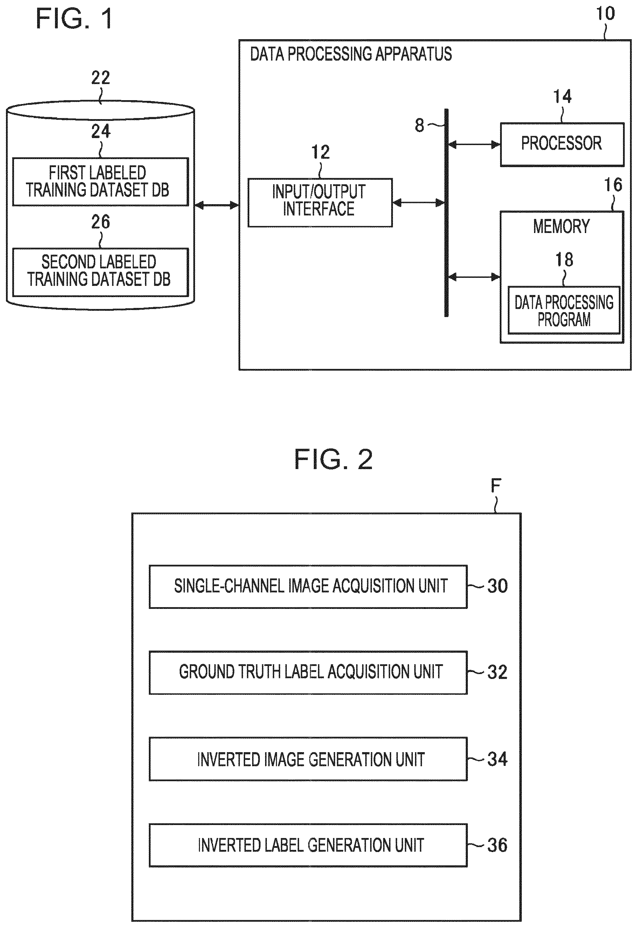

Fig. 1 is a block diagram illustrating an example of a hardware configuration of a data processing apparatus according to the present invention.

A data processing apparatus 10 includes a processor 14, a memory 16 that is constituted by a non-transitory tangible object, and an input/output interface 12. A computer that functions as the data processing apparatus 10 may be a workstation, a personal computer, a tablet terminal, or a server.

The processor 14 is constituted by a central processing unit (CPU). The processor 14 may also be constituted by a graphics processing unit (GPU). The processor 14 is connected to the memory 16 and the input/output interface 12 via a bus 8.

Information is input to the data processing apparatus 10 via the input/output interface 12. In addition, information is output via the input/output interface 12. For example, via the input/output interface 12, a labeled training dataset database (DB) 22 is connected to the data processing apparatus 10, and a first labeled training dataset and a second labeled training dataset are input to the data processing apparatus 10.

The memory 16 includes a memory that is a main memory, and a storage that is an auxiliary storage device. The memory 16 may be, for example, a semiconductor memory, a hard disk drive (HDD) device, a solid state drive (SSD) device, or a combination of a plurality of these devices.

The memory 16 stores a program for controlling the data processing apparatus 10. For example, the memory 16 stores a data processing program 18 for executing a data processing method. The memory 16 also stores a general program for operating the data processing apparatus 10.

In the case illustrated in Fig. 1, the external labeled training dataset DB 22 is connected to the data processing apparatus 10. However, the labeled training dataset DB 22 may be included in the data processing apparatus 10.

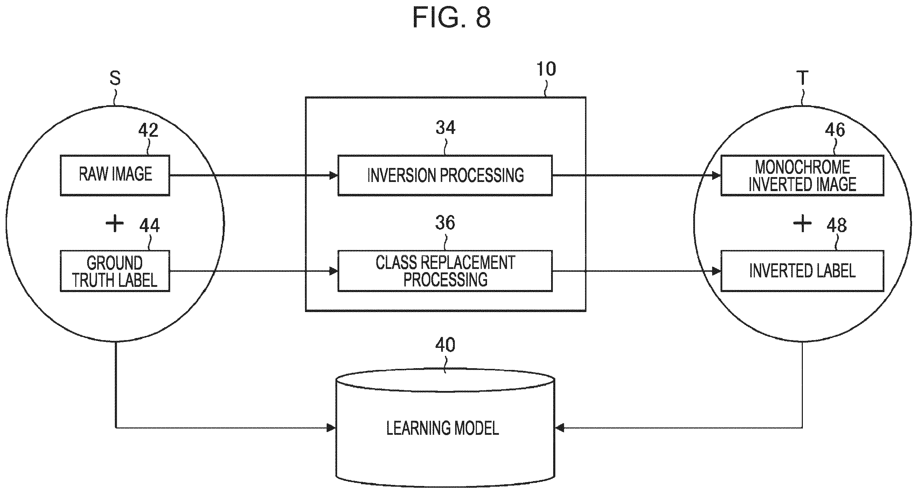

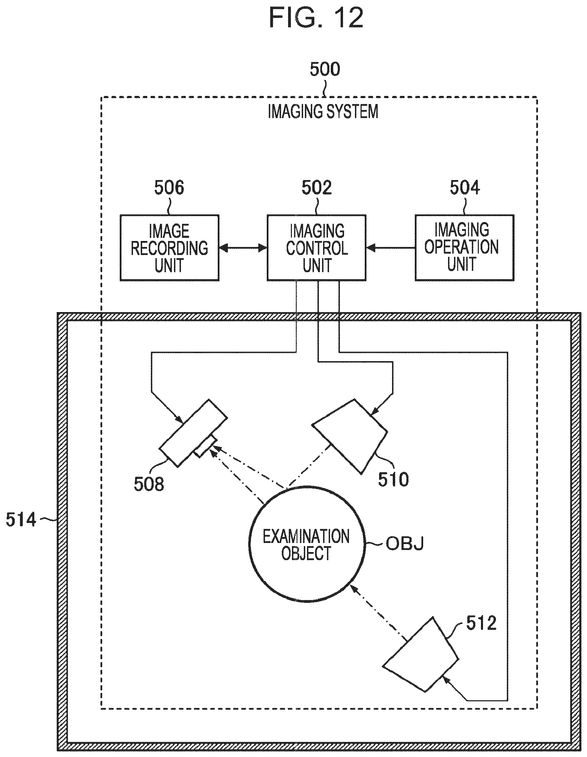

The labeled training dataset DB 22 includes a first labeled training dataset DB 24 and a second labeled training dataset DB 26. A first labeled training dataset and a second labeled training dataset are each constituted by training data on which a learning model 40 (Fig. 8) performs learning and a ground truth label of the training data. The first labeled training dataset DB 24 stores a plurality of first labeled training datasets. For example, each first labeled training dataset is constituted by a single-channel image (corresponding training data) captured by an imaging system 500 (Fig. 12) and a defect interpreted in the single-channel image. The second labeled training dataset DB 26 stores a plurality of second labeled training datasets. Each second labeled training dataset is constituted by an inverted image (corresponding to training data) of a single-channel image and an inverted label (corresponding to a ground truth label) obtained by performing replacement processing on a ground truth label. The second labeled training datasets are labeled training datasets obtained by data augmentation of the first labeled training dataset, and are generated by the data processing apparatus 10.

Fig. 1 illustrates an example in which the labeled training dataset DB 22 includes the first labeled training dataset DB 24 and the second labeled training dataset DB 26. However, the first labeled training dataset DB 24 and the second labeled training dataset DB 26 may be provided separately.

Fig. 2 is a diagram illustrating functional blocks of functions F implemented by the processor 14 executing the data processing program 18 stored in the memory 16.

The functions F implemented by the processor 14 executing the data processing program 18 include a single-channel image acquisition unit 30, a ground truth label acquisition unit 32, an inverted image generation unit 34, and an inverted label generation unit 36. As a result of each of the above-described functions F being implemented, data augmentation is performed on a first labeled training dataset, so that a second labeled training dataset is generated.

The single-channel image acquisition unit 30 acquires a single-channel image, which is training data of a first labeled training dataset, from the labeled training dataset DB 22. Herein, the single-channel image is an image of which the pixel values are determined in accordance with a physical quantity sensed by light-receiving elements during imaging or an image of which the pixel values are determined by reversible transformation on the physical quantity. Herein, specific reversible transformation is at least one of linear transformation, logarithmic transformation, or nonlinear transformation using a pixel value correspondence table. In addition, the single-channel image is an image that has undergone only transformation that allows an original physical phenomenon to be traced by inverse transformation. That is, the single-channel image is also said to be an image that has not undergone irreversible transformation. A specific example of the single-channel image is a raw image. Herein, a raw image is constituted by undeveloped image data output from imaging elements which are light-receiving elements. An amount of light received by each of the light-receiving elements and a signal value output by the light-receiving element have a linear relationship. In addition, another specific example of the single-channel image is a monochrome image that captures an amount of light at a wavelength of a specific spectrum (color), such as an image acquired by a microscope through a red filter, for example. In addition, the single-channel image is an image captured by a digital detector array (DDA) that receives radiation transmitted through a photographic subject, or a computed radiography (CR) captured image obtained by causing a reading device to output, as digital values, a received light signal from an imaging plate (IP). In addition, the single-channel image is an image obtained by lens-free imaging.

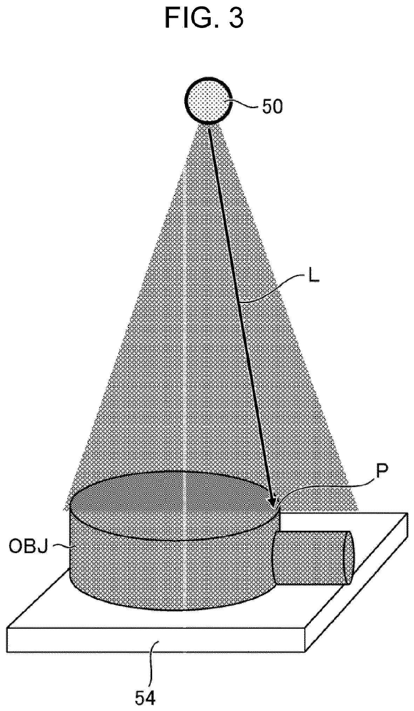

Fig. 3 is a schematic diagram for describing capturing of a single-channel image.

Fig. 3 illustrates a radiation source 50, an examination object OBJ, and a detector 54. The detector 54 is constituted by a light-receiving panel, and is an example of light-receiving elements.

The examination object OBJ is irradiated with radiation emitted from the radiation source 50. The detector 54 receives the radiation transmitted through the examination object OBJ. The detector 54 outputs a single-channel image 56 of the examination object OBJ.

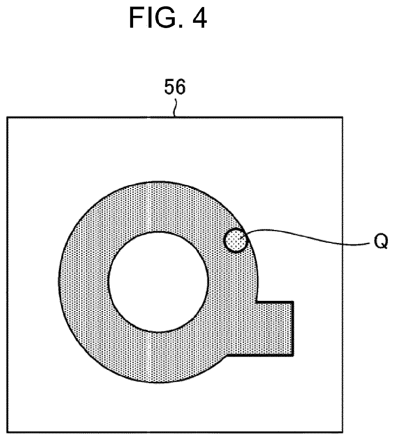

Fig. 4 is a diagram illustrating the single-channel image 56 of the examination object OBJ obtained by the detector 54. A value of a pixel Q of the single-channel image 56 is determined in accordance with intensity of the radiation transmitted through an examination object OBJ on a straight line L connecting the detector 54 and the radiation source 50 to each other, and corresponds to a region P of the examination object OBJ penetrated by the straight line L. Therefore, each pixel of the single-channel image has a digital value proportional to an amount of received light at the corresponding detector 54 or a digital value correlated with the amount of received light. In addition, each pixel of the single-channel image has a digital value correlated with the physical quantity at a corresponding point (for example, a point P) of the examination object OBJ (photographic subject).

Subsequently, a specific example of a non-single-channel image in the present invention will be described for reference. An image constituted by pixel values read via a secondary external apparatus with unknown characteristics, such as pixel values read via a low-bit monitor, is not a single-channel image because the characteristics of the original physical quantity become unknown. In addition, an image that has undergone look-up table (LUT) transformation that may cause overexposure or underexposure is not a single-channel image. In addition, an image that has undergone "many-to-one" transformation in which a plurality of values are aggregated into one value is also not a single-channel image because an amount of information is reduced. An image that has undergone non-linear processing such as gamma correction is also not a single-channel image because the image becomes asymmetric when inversion processing is performed by the inverted image generation unit 34. Note that if the inverse transformation of correction can be theoretically defined and the information is not degraded by the transformation, the resultant image can be a single-channel image. However, even if a theoretical function can be calculated, unless a correspondence can be achieved in terms of quantization, the resultant image cannot be a single-channel image.

The ground truth label acquisition unit 32 (Fig. 2) acquires a ground truth label of a first labeled training dataset from the labeled training dataset DB 22.

Herein, the ground truth label has information on a ground truth used in a case where the learning model 40 learns a single-channel image as training data. For example, the ground truth label has information on a defect interpreted from the single-channel image.

The inverted image generation unit 34 (Fig. 2) generates an inverted image by performing data augmentation on a single-channel image. The inverted image generation unit 34 inverts pixel values of a single-channel images that constitutes a first labeled training dataset to generate an inverted image.

As a specific example of the inversion processing performed by the inverted image generation unit 34, processing of replacing a pixel value "p" at each coordinates to "65535 - p" is performed in a case where the minimum value and the maximum value of the pixel values of the single-channel image are 0 and 65535, respectively.

In addition, as another specific example of the inversion processing performed by the inverted image generation unit 34, inversion processing with a function-based transformation in the middle is performed. When the pixels are configured to be proportional to a logarithm of the physical quantity, the inverted image generation unit 34 can perform inversion processing of transforming a pixel value "p" constituting an image into "exp(p)", calculating the maximum value and the minimum value after the transformation, performing linear inversion (max(exp(p)) - exp(p)), and obtaining a logarithm of the resultant value.

In addition, the inversion processing of the inverted image generation unit 34 is not limited to the inversion processing described above, and includes other processing such as transformation using a correspondence table (LUT) between a pixel value and a pixel value that are determined in any manner in advance such that a point having a relatively high pixel value and a point having a relatively low pixel value become a low point and a high point, respectively.

Note that the pixel values of the single-channel image may be values based on a brightness signal, may be based on a pixel value signal representing depth information captured by a light detection and ranging (LiDAR) camera, may be based on density information obtained by reading light and shade of an examination film through which X-rays have transmitted, or the like. The interpretation of the physical quantity represented by the pixels is not limited to brightness.

As described above, when there is a relationship in which a physical phenomenon is represented by pixel values, the inverted image generation unit 34 performs transformation that allows a physical phenomenon corresponding to that physical phenomenon to be expected by inverted pixel values. On the other hand, if transformation performed by the inverted image generation unit 34 makes how an original defect is transformed unknown before and after the transformation, such transformation is excluded from the transformation performed by the inverted image generation unit 34.

The inverted label generation unit 36 (Fig. 2) generates an inverted label by performing data augmentation on a ground truth label.

When a single-channel image undergoes the inversion processing, the inverted label generation unit 36 performs class replacement processing on the ground truth label of the single-channel image. For example, when the single-channel image is a transmission image, information indicating whether the examination object OBJ is recessed or excessively swollen appears in levels of brightness values of the single-channel image that is the transmission image. In such a case, the levels of the brightness values may be important information for distinguishing the type of the defect. In this case, data augmentation is performed on the ground truth label by performing the class replacement processing on the ground truth label to generate the inverted label.

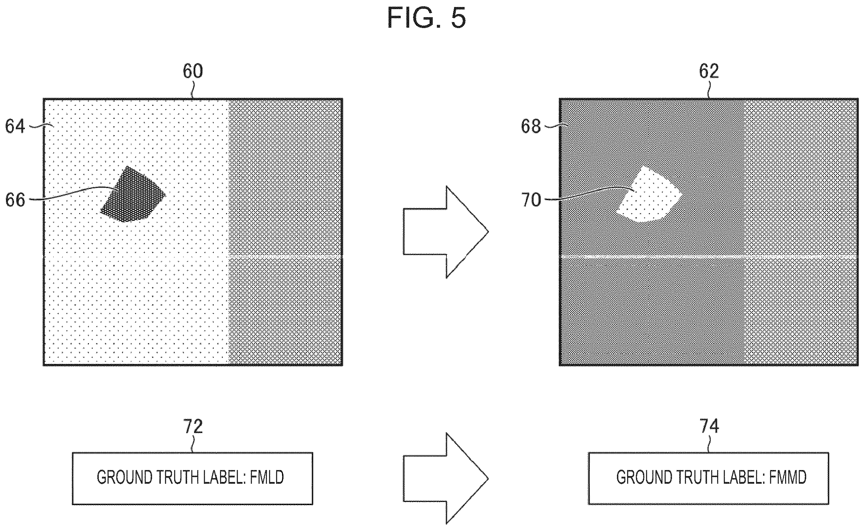

Fig. 5 is a diagram for describing the class replacement processing performed on the ground truth label in the inverted label generation unit 36.

Fig. 5 illustrates an image 60 depicting a low-density defect and an image 62 depicting a high-density defect.

The image 60 has a region 66 indicating foreign material less dense (FMLD). The region 66 is darker than a background 64. Herein, FMLD is a general term for low-density foreign matter. For example, when a region is chipped, a flow of casting metal is insufficient in a region, a region is damaged and scraped, and a bubble or gas mixes into a region, those regions (regions (the region 66) indicating FMLD) are displayed darker than a surrounding region (the background 64). Note that a ground truth label 72 that constitutes a first labeled training dataset together with the image 60 is FMLD.

The image 62 has a region 70 indicating foreign material more dense (FMMD). The region 70 is brighter than a background 68. Herein, FMMD is a general term for high-density foreign matter. For example, when a member is made of aluminum and the member is swollen more than necessary in a casting process, when scattered metal adheres to the member, and when impurities having a higher density than aluminum are embedded in the member, those regions (the regions (the region 70) indicating FMMD) are displayed "white" (bright) because those regions are less easy for X-rays to transmit through. That is, in the region (region 70) indicating the FMMD, the pixel values are greater than those in the normal state. Note that when the image 62 is used as training data, a ground truth label 74 is FMMD.

As described above, the relationship between the region 66 indicating FMLD and the background 64 and the relationship between the region 70 indicating FMMD and the background 68 are in an inverse relationship. Thus, when "monochrome inversion" is performed collectively on the entire image of the region in which the foreign matter or the defect exists (the region 66 indicating FMLD) and the background region (the background 64), the level of the defect region relative to the background is relatively reversed. In this case, the ground truth label 72 is also inverted and transformed into an inverted label (the ground truth label 74).

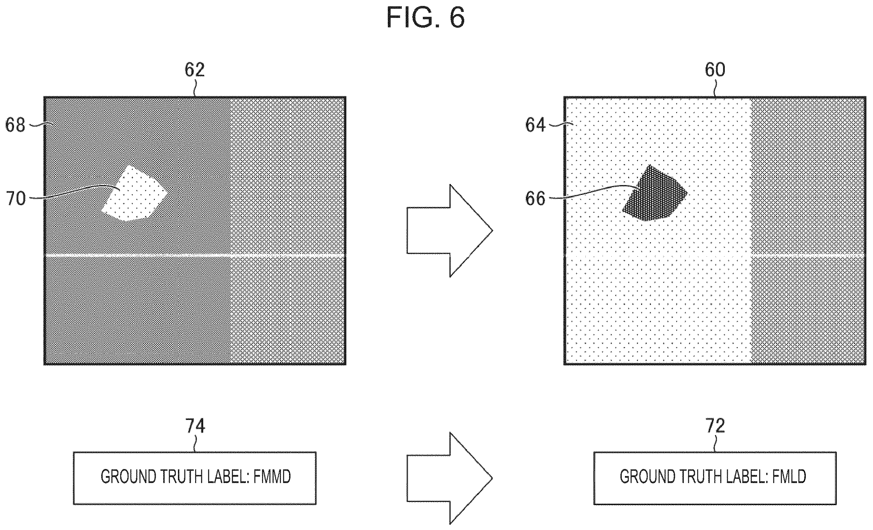

In Fig. 5, the case has been described where monochrome inversion is performed from the image 60 having the region 66 indicating FMLD to the image 62 having the region 70 indicating FMMD. However, the processing is not limited this inversion. As illustrated in Fig. 6, monochrome inversion can be similarly performed from the image 62 having the region 70 indicating FMMD to the image 60 having the region 66 indicating FMLD.

Note that replacement of the ground truth label enables coexistence of defects of both categories in the same image to be handled without any problem.

The case where FMLD and FMMD correspond to each other on a one-to-one basis has been described above. However, FMLD and FMMD do not necessarily correspond to each other on a one-to-one basis. In the case where FMLD and FMMD do not correspond to each other on a one-to-one basis in this manner, preferably, a class design of the ground truth label that constitutes the second labeled training dataset is edited in response to setting the inverted image as the training data.

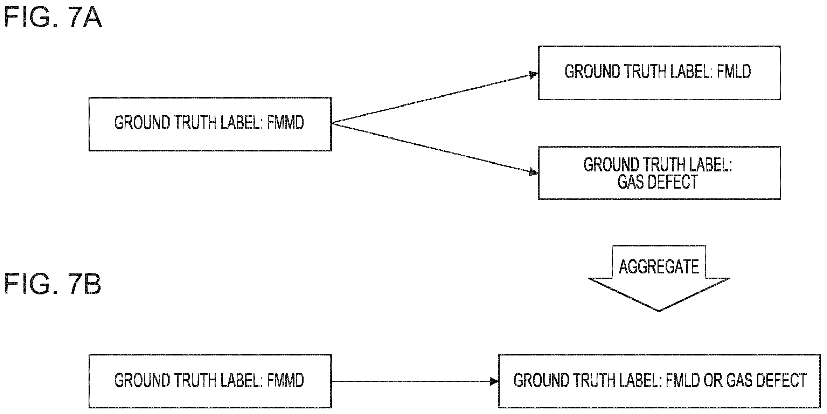

Figs. 7A and 7B are diagrams for describing editing of the class design of a ground truth label (inverted label) of a second labeled training dataset.

Fig. 7A is a diagram illustrating a case where there are a plurality of replacement labels for the ground truth label FMMD. A gas defect, which is caused by mixing of gas or the like, appears dark (small pixel values) relatively to the background. This is common to FMLD described above. Thus, when the inverted label of the ground truth label FMMD obtained, there are a plurality of replacement labels which are FMLD and a gas defect (see Fig. 7A). Accordingly, although there is room to regard the gas defect and FMLD as different classes in the ground truth label, the gas defect and FMLD are edited to be handled as one new class in an aggregated manner.

Fig. 7B is a diagram for describing a case where the class design of the replacement ground truth labels of the ground truth label FMMD is edited for aggregation. In the case illustrated in Fig. 7B, the replacement ground truth labels are edited to be one ground truth label "FMLD or gas defect", which is handled as a new class in an aggregated manner. This omits the case where there are a plurality of replacement labels, and enables effective learning to be performed in learning of a detection or classification model.

In addition, preferably, the first labeled training dataset in the present invention is selected such that in a case where the first labeled training dataset is augmented, the inverted label does not cause any contradiction. Specifically, when the ground truth label indicates a certain defect, a dataset in which a defect exists for the inverted label is preferably selected as the first labeled training dataset. In addition, preferably, the first labeled training dataset is selected such that in a case where the first labeled training dataset is augmented, the inverted label is effective for learning.

In the data augmentation described above, a constraint of keeping a ground truth label (e.g., a classification class) associated with an image unchanged before and after the data augmentation may be applied. This is to avoid the occurrence of an incorrect class (nonexistent data) that results from the data augmentation.

Likewise, in the present invention, it is also conceivable to selectively invert only a specific class. For example, a porosity (= minute gas) defect tends to occur densely in a wide range, unlike mixing of foreign matter. Pixel inversion can be similarly performed on an image including this porosity defect, so that the porosity defect is regarded as many white defects. However, when an image resulting from inversion, that is, a "high-density and densely occurring" defect cannot actually occur in an examination target, or when such a defect may occur but does not affect the quality of a product and thus is excluded from the examination items, learning need not be performed in some cases.

Under such a circumstance, preferably, pixel inversion is applied only to images not including the porosity defect.

As described above, preferably, the first labeled training dataset in the present invention is selected such that in a case where the first labeled training dataset is augmented, the inverted label does not cause any contradiction. In addition, preferably, the first labeled training dataset is selected such that in a case where the first labeled training dataset is augmented, the inverted label is effective for learning.

Fig. 8 is a diagram illustrating a specific example of a first labeled training dataset and second labeled training dataset.

A first labeled training dataset S is constituted by a raw image 42, which is training data, and a ground truth label 44.

The inverted image generation unit 34 performs inversion processing on the raw image 42 to generate a monochrome inverted image 46. In addition, the inverted label generation unit 36 performs class replacement processing on the ground truth label 44 to generate an inverted label 48. The monochrome inverted image 46 and the inverted label 48 constitute a second labeled training dataset T. The first labeled training dataset S and the second labeled training dataset T are used as training data for machine learning of the learning model 40.

As described above, the second labeled training dataset T is generated from the first labeled training dataset S by performing data augmentation. Then, the learning model 40 performs learning using the first labeled training dataset S and the second labeled training dataset T. This allows the learning model 40 to perform effective learning.

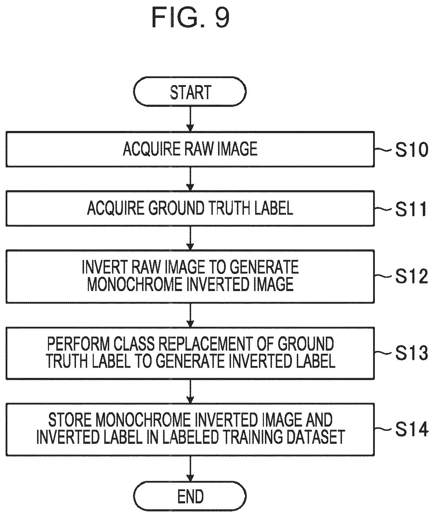

Fig. 9 is a flowchart for describing a data processing method executed using the data processing apparatus 10. Note that the flowchart will be described in accordance with the specific example described in Fig. 8. Each step is executed by the processor 14 of the data processing apparatus 10 executing the data processing program 18.

First, the single-channel image acquisition unit 30 acquires the raw image 42 from the labeled training dataset DB 22 (step S10). Then, the ground truth label acquisition unit 32 acquires the ground truth label 44 of the raw image 42 from the labeled training dataset DB 22 (step S11). Subsequently, the inverted image generation unit 34 performs inversion processing on the raw image 42 to generate the monochrome inverted image 46 (a step of generating an inverted image as training data of a second labeled training dataset: step S12). Then, the inverted label generation unit 36 performs class replacement on the ground truth label 44 to generate the inverted label 48 (a step of generating an inverted label as a ground truth label that constitutes the second labeled training dataset: step S13). Then, the data processing apparatus 10 outputs the monochrome inverted image 46 and the inverted label 48 from the input/output interface 12, and stores the monochrome inverted image 46 and the inverted label 48 in the second labeled training dataset DB 26 (step S14).

As described above, data augmentation (inversion processing and class replacement processing) is performed on the raw image 42 and the ground truth label 44 that constitute the first labeled training dataset S, so that the monochrome inverted image 46 and the inverted label 48 that constitute the second labeled training dataset T are generated. Then, both the first labeled training dataset S and the generated second labeled training dataset T are used for learning of the learning model 40. This allows the learning model 40 to perform effective learning.

In the embodiment described above, the hardware structure of the processing units (the single-channel image acquisition unit 30, the ground truth label acquisition unit 32, the inverted image generation unit 34, and the inverted label generation unit 36) that execute various kinds of processing is various processors mentioned below. The various processors include, for example, a central processing unit (CPU) which is a general-purpose processor that executes software (program) to function as the various processing units; a programmable logic device (PLD) which is a processor whose circuit configuration is changeable after manufacture, such as a field programmable gate array (FPGA); and a dedicated electric circuit which is a processor having a circuit configuration designed exclusively for executing specific processing, such as an application-specific integrated circuit (ASIC).

A single processing unit may be implemented by one of these various processors, or may be implemented by two or more processors of the same kind or of different kinds (for example, a plurality of FPGAs or a combination of a CPU and an FPGA). In addition, the plurality of processing units may be implemented by a single processor. Examples in which the plurality of processing units are implemented by a single processor include a first configuration, as exemplified by a computer such as a client or a server, in which a combination of one or more CPUs and software constitutes a single processor and this processor functions as the plurality of processing units. The examples also include a second configuration, as exemplified by a system on chip (SoC) or the like, in which a processor that implements the functions of the entire system including the plurality of processing units with a single integrated circuit (IC) chip is used. As described above, the various processing units are constituted by using one or more of the various processors described above in terms of the hardware structure.

Further, the hardware structure of these various processors is, more specifically, electric circuitry in which circuit elements such as semiconductor elements are combined.

The configurations and functions described above can be appropriately implemented by any hardware, any software, or a combination of both. For example, the present invention can also be applied to a program that causes a computer to execute the processing steps (processing procedure) described above, a computer-readable recording medium (non-transitory recording medium) in which such a program is recorded, or a computer on which such a program is installable.

### Second Embodiment

A second embodiment will be described next. In the present embodiment, normalization or standardization is performed on training data. The present embodiment can prevent pixel values from being biased by inversion, and allows the learning model 40 to perform effective learning.

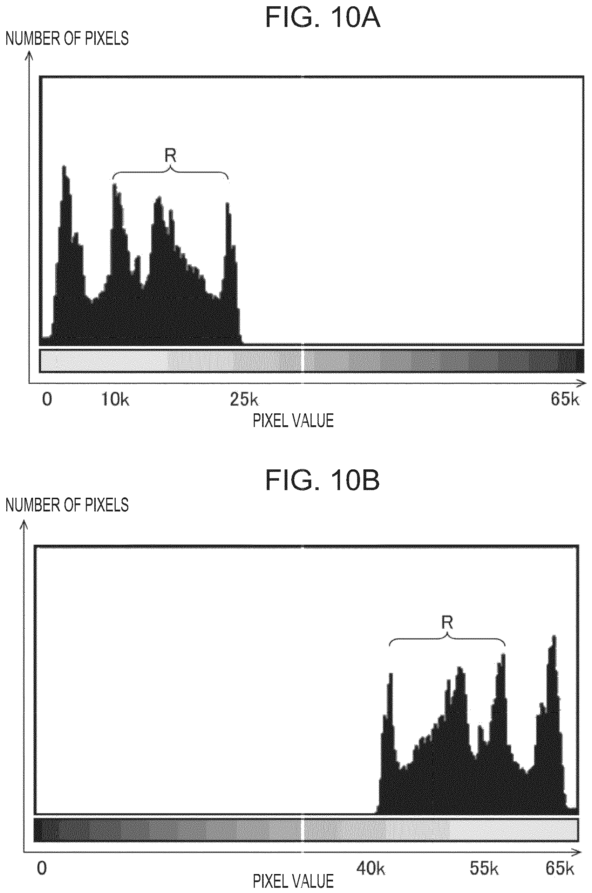

Figs. 10A and 10B are diagram illustrating pixel values constituting an image. Fig. 10A illustrates pixel values constituting a raw image a. Fig. 10B illustrates pixel values constituting an inverted image a obtained by performing inversion processing on the raw image a in the inverted image generation unit 34. Note that in Figs. 10A and 10B, a horizontal axis represents the pixel value, and a vertical axis represents the number of pixels.

In the case illustrated in Fig. 10A, when the possible pixel value in the image is from 0 to 65535, pixel values constituting a region of interest of the raw image a are in a range of 10000 to 25000 (see a range R in Fig. 10A). In this case, pixel values constituting a region of interest in the inverted image a are distributed in a range of about 40000 to 55000 (see a range R in Fig. 10B). As described above, when the pixel values of the region of interest greatly differ between the raw image a and the inverted image a, the learning model 40 may be unable to appropriately perform learning even if the first labeled training dataset and the second labeled training dataset that use these images as training data are input to the learning model 40.

Accordingly, in the present embodiment, normalization or standardization is performed on the raw image a to allow only the relative levels of the pixel value distribution to be focused on. Therefore, the influence of normalization or standardization is suppressed, and the learning model 40 can effectively learn the first labeled training dataset and the second labeled training dataset.

In the above, a method of normalizing or standardizing the raw image a has been described. However, as a method of dealing with a case where the pixel values of the region of interest greatly differ between the raw image a and the inverted image a, a mechanism of suppressing the level for each patch image, such as layer normalization, may be included in an input layer of the learning model 40.

### Third Embodiment

A third embodiment will be described next. In the present embodiment, an inverted image is generated by inverting pixel values of a partial region of a single-channel image, and an inverted label is generated as a ground truth label that constitutes a second labeled training dataset, based on a ground truth label of the single-channel image corresponding to the partial region.

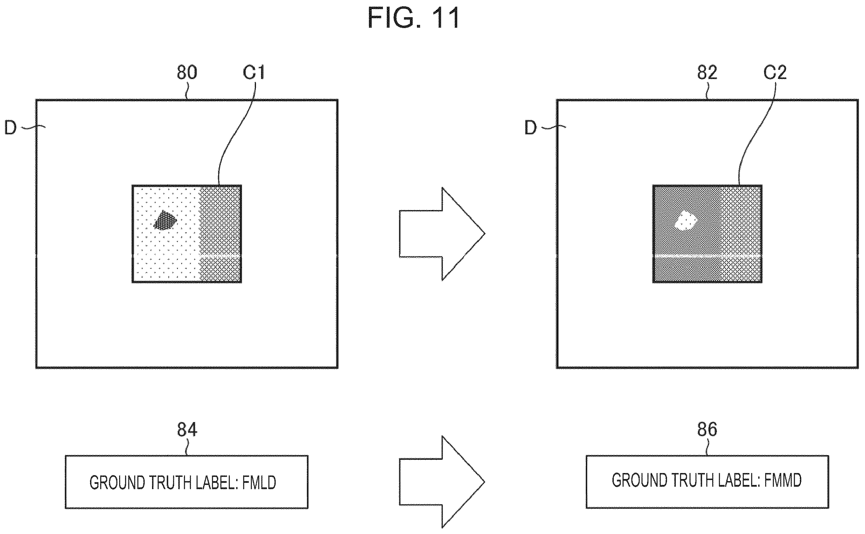

Fig. 11 is a diagram for describing a first labeled training dataset and a second labeled training dataset according to the present embodiment.

A single-channel image 80 has a component region C1 and a background region D other than the component region C1. Note that a mask image may be superimposed onto the single-channel image 80 to separate the component region C1 and the background region D from each other.

The inverted image generation unit 34 performs inversion processing only on the component region C1 of the single-channel image 80 to generate an inverted image 82. In the inverted image 82, only a component region C2 is constituted by an image obtained by performing the inversion processing on the component region C1, and the background region D is the same as the background region D of the single-channel image 80. In addition, the inverted label generation unit 36 performs replacement processing on a ground truth label 84, which is FMLD, for the component region C1 to a ground truth label 86 (FMMD).

As described above, in the present embodiment, an inverted image is generated only for a region of interest such as a component region, and an inverted label is generated based on a ground truth label for the region of interest. This allows a second labeled training dataset to be generated by focusing on the region of interest. Thus, the learning model 40 can perform learning more effectively.

### Example of Configuration of Imaging System

An example of the imaging system 500 for capturing an image (single-channel image) of the examination object OBJ will be described next. Fig. 12 is a block diagram schematically illustrating an example of a configuration of the imaging system 500. The imaging system 500 is for imaging the examination object OBJ placed in an imaging room 514. The imaging system 500 includes an imaging control unit 502, an imaging operation unit 504, an image recording unit 506, a camera 508, and radiation sources 510 and 512.

The imaging control unit 502 includes a CPU that controls an operation of each unit of the imaging system 500. The imaging control unit 502 receives an operation input from an operator (photographer) via the imaging operation unit 504, and transmits a control signal corresponding to this operation input to each unit of the imaging system 500 to control the operation of the unit.

The imaging operation unit 504 includes an input device that receives an operation input from the operator. The operator can input, via the imaging operation unit 504, information about the examination object OBJ, an instruction of imaging conditions and an instruction to execute imaging for the camera 508, an instruction of radiation emission conditions for the radiation sources 510 and 512, an instruction to record an image obtained by imaging in the image recording unit 506, and the like. The imaging conditions include, for example, imaging conditions such as an exposure time, a focal length, and an aperture diaphragm, an imaging angle, an imaging location, and the like. The radiation emission conditions include an emission start time, an emission duration, an emission angle, an emission intensity, and the like.

The image recording unit 506 records image data (received light image) of the examination object OBJ captured by the camera 508. The image recording unit 506 records information for identifying the examination object OBJ in association with the image data.

The camera 508 and the radiation sources 510 and 512 are arranged inside the imaging room 514. The radiation sources 510 and 512 are, for example, X-ray sources. A partition wall between the imaging room 514 and the outside and an entrance/exit are protected against X-rays by an X-ray protection material (such as lead or concrete, for example). When the examination object OBJ is irradiated with visible light for imaging, the imaging room 514 provided with the protection need not be used.

In accordance with an instruction from the imaging control unit 502, the radiation sources 510 and 512 irradiate the examination object OBJ placed in the imaging room 514 with radiation.

In accordance with an instruction to execute imaging from the imaging control unit 502, the camera 508 images the examination object OBJ by receiving radiation emitted from the radiation source 510 to the examination object OBJ and reflected by the examination object OBJ or radiation emitted from the radiation source 512 to the examination object OBJ and transmitted through the examination object OBJ. The examination object OBJ is held in the imaging room 514 by a holding member (not illustrated) (such as a manipulator, a placement table, or a movable placement table, for example). Distances and angles of the examination object OBJ with respect to the camera 508 and the radiation sources 510 and 512 are adjustable. The operator can control the relative positions of the examination object OBJ, the camera 508, and the radiation sources 510 and 512 via the imaging control unit 502, and can image a desired portion of the examination object OBJ.

The radiation sources 510 and 512 end irradiation of the examination object OBJ with radiation in synchronization with the end of execution of imaging by the camera 508.

In the example illustrated in Fig. 12, the camera 508 is disposed inside the imaging room 514. However, the camera 508 may be disposed outside the imaging room 514 if the camera 508 can image the examination object OBJ located in the imaging room 514. Further, in the example illustrated in Fig. 12, one camera 508 and two radiation sources 510 and 512 are provided. However, the number of cameras and the number of radiation sources are not limited to these numbers. For example, the number of cameras and the number of radiation sources each may be plural or each may be one. The imaging control unit 502, the imaging operation unit 504, and the image recording unit 506 can be implemented by using a combination of hardware and software of a computer.

The data processing apparatus 10 may be communicably connected to the imaging system 500. Alternatively, the data processing apparatus 10 may be configured to function as the imaging control unit 502, the imaging operation unit 504, and the image recording unit 506 of the imaging system 500.

Although examples of the present invention have been described above, the present invention is not limited to the above-described embodiments, and it is needless to say that various modifications can be made within a scope of the present invention.

### Reference Signs List

- 8: bus
- 10: data processing apparatus
- 12: input/output interface
- 14: processor
- 16: memory
- 18: data processing program
- 30: single-channel image acquisition unit
- 32: ground truth label acquisition unit
- 34: inverted image generation unit
- 36: inverted label generation unit
- 40: learning model
- 42: raw image
- 44: ground truth label
- 46: monochrome inverted image
- 48: inverted label
- 50: radiation source
- 54: detector
- 56: single-channel image

## Claims

1. A data processing apparatus comprising:
a processor configured to:
generate an inverted image obtained by inverting pixel values of a single-channel image that constitutes a first labeled training dataset, as training data of a second labeled training dataset obtained by augmentation of the first labeled training dataset, the single-channel image being an image of which the pixel values are determined in accordance with a physical quantity sensed by light-receiving elements during imaging or an image of which the pixel values are determined by reversible transform on the physical quantity; and
generate an inverted label corresponding to the inverted image, as a ground truth label that constitutes the second labeled training dataset, the inverted label being generated based on a ground truth label of the single-channel image, the ground truth label of the single-channel image constituting the first labeled training dataset.

2. The data processing apparatus according to claim 1, wherein the single-channel image is an image captured by a digital detector array (DDA) that receives radiation transmitted through a photographic subject or a computed radiography (CR) captured image obtained by causing a reading device to output, as digital values, a received light signal from an imaging plate (IP).

3. The data processing apparatus according to claim 1 or 2, wherein each pixel of the single-channel image has a digital value proportional to an amount of received light at a corresponding light-receiving element among the light-receiving elements or a digital value correlated with the amount of received light.

4. The data processing apparatus according to any one of claims 1 to 3, wherein each pixel of the single-channel image has a digital value correlated with the physical quantity at a corresponding point of a photographic subject.

5. The data processing apparatus according to any one o claims 1 to 4, wherein the first labeled training dataset is selected such that in a case where the first labeled training dataset is augmented, the inverted label does not cause any contradiction and/or the inverted label is effective for learning.

6. The data processing apparatus according to any one of claims 1 to 5, wherein the processor is configured to:
generate the inverted image by inverting the pixel values of a partial region of the single-channel image; and
generate the inverted label as the ground truth label that constitutes the second labeled training dataset, based on a ground truth label of the single-channel image corresponding to the partial region.

7. The data processing apparatus according to any one of claims 1 to 6, wherein the processor is configured to edit a class design of the ground truth label that constitutes the second labeled training dataset in response to setting the inverted image as the training data.

8. The data processing apparatus according to claim 7, wherein the processor performs, in the class design, class replacement in response to the setting of the inverted image as the training data.

9. The data processing apparatus according to claim 8, wherein the processor inverts the ground truth label to generate the inverted label in the class replacement.

10. The data processing apparatus according to any one of claims 1 to 9, wherein the single-channel image is an image that has not undergone irreversible transformation.

11. A data processing method comprising:
performing, by a processor,
a step of generating an inverted image obtained by inverting pixel values of a single-channel image that constitutes a first labeled training dataset, as training data of a second labeled training dataset obtained by augmentation of the first labeled training dataset, the single-channel image being an image of which the pixel values are determined in accordance with a physical quantity sensed by light-receiving elements during imaging or an image of which the pixel values are determined by reversible transform on the physical quantity; and
a step of generating an inverted label corresponding to the inverted image, as a ground truth label that constitutes the second labeled training dataset, the inverted label being generated based on a ground truth label of the single-channel image, the ground truth label of the single-channel image constituting the first labeled training dataset.

12. The data processing method according to claim 11, wherein the processor performs, in a class design of the ground truth label that constitutes the second labeled training dataset, class replacement in response to setting the inverted image as the training data.

13. The data processing method according to claim 12, wherein the processor inverts the ground truth label to generate the inverted label in the class replacement.

14. The data processing method according to any one of claims 11 to 13, wherein the single-channel image is an image that has not undergone irreversible transformation.

15. A non-transitory computer-readable recording medium on which a program for causing a computer to execute the data processing method according to any one of claims 11 to 14 is recorded.

## Patentansprüche

1. Datenverarbeitungsvorrichtung, umfassend:
einen Prozessor, der so konfiguriert ist, dass er:
ein invertiertes Bild, das durch Invertieren von Pixelwerten eines Einzelkanalbildes, das einen ersten etikettierten Trainingsdatensatz bildet, erhalten wird, als Trainingsdaten eines zweiten etikettierten Trainingsdatensatzes, der durch Verstärkung des ersten etikettierten Trainingsdatensatzes erhalten wird, erzeugt, wobei das Einzelkanalbild ein Bild ist, von dem die Pixelwerte in Übereinstimmung mit einer physikalischen Größe, die von Lichtempfangselementen während Bildgebung empfangen wird, bestimmt werden, oder ein Bild ist, von dem die Pixelwerte durch reversible Transformation an der physikalischen Größe bestimmt werden; und
ein invertiertes Etikett, das dem invertierten Bild entspricht, als ein Ground-Truth-Etikett, das den zweiten etikettierten Trainingsdatensatz bildet, erzeugt, wobei das invertierte Etikett auf der Grundlage eines Ground-Truth-Etiketts des Einzelkanalbildes erzeugt wird, wobei das Ground-Truth-Etikett des Einzelkanalbildes den ersten etikettierten Trainingsdatensatz bildet.

2. Datenverarbeitungsvorrichtung nach Anspruch 1, wobei das Einzelkanalbild ein Bild ist, das von einem digitalen Detektorarray (DDA) aufgenommen wird, das Strahlung, die durch ein fotografisches Motiv transmittiert wird, empfängt, oder ein aufgenommenes Bild von Computerradiographie (CR), das durch Veranlassen einer Lesevorrichtung, als digitale Werte ein empfangenes Lichtsignal von einer Bildplatte (imaging plate, IP) auszugeben, erhalten wird.

3. Datenverarbeitungsvorrichtung nach Anspruch 1 oder 2, wobei jedes Pixel des Einzelkanalbildes einen digitalen Wert, der zu einer Menge an empfangenem Licht an einem entsprechenden Lichtempfangselement unter den Lichtempfangselementen proportional ist, oder einen digitalen Wert, der mit der Menge an empfangenem Licht korreliert, aufweist.

4. Datenverarbeitungsvorrichtung nach einem der Ansprüche 1 bis 3, wobei jedes Pixel des Einzelkanalbildes einen digitalen Wert, der mit der physikalischen Größe an einem entsprechenden Punkt eines fotografischen Motivs korreliert, aufweist.

5. Datenverarbeitungsvorrichtung nach einem der Ansprüche 1 bis 4, wobei der erste etikettierte Trainingsdatensatz so ausgewählt wird, dass in einem Fall, in dem der erste etikettierte Trainingsdatensatz vergrößert wird, das invertierte Etikett keine Widersprüche verursacht und/oder das invertierte Etikett zum Lernen wirksam ist.

6. Datenverarbeitungsvorrichtung nach einem der Ansprüche 1 bis 5, wobei der Prozessor so konfiguriert ist, dass er:
das invertierte Bild durch Invertieren der Pixelwerte eines Teilbereichs des Einzelkanalbildes erzeugt; und
das invertierte Etikett als das Ground-Truth-Etikett, das den zweiten etikettierten Trainingsdatensatz bildet, auf der Grundlage eines Ground-Truth-Etiketts des Einzelkanalbildes, das dem Teilbereich entspricht, erzeugt.

7. Datenverarbeitungsvorrichtung nach einem der Ansprüche 1 bis 6, wobei der Prozessor so konfiguriert ist, dass er ein Klassendesign des Ground-Truth-Etiketts, das den zweiten etikettierten Trainingsdatensatz bildet, als Reaktion auf Einstellen des invertierten Bildes als die Trainingsdaten bearbeitet.

8. Datenverarbeitungsvorrichtung nach Anspruch 7, wobei der Prozessor in dem Klassendesign Klassenersetzung in Reaktion auf die Einstellung des invertierten Bildes als die Trainingsdaten durchführt.

9. Datenverarbeitungsvorrichtung nach Anspruch 8, wobei der Prozessor das Ground-Truth-Etikett invertiert, um das invertierte Etikett bei der Klassenersetzung zu erzeugen.

10. Datenverarbeitungsvorrichtung nach einem der Ansprüche 1 bis 9, wobei das Einzelkanalbild ein Bild ist, das keiner irreversiblen Transformation unterzogen worden ist.

11. Datenverarbeitungsverfahren, umfassend:
Durchführen, von einem Prozessor,
eines Schritts des Erzeugens eines invertierten Bildes, das durch Invertieren von Pixelwerten eines Einzelkanalbildes, das einen ersten etikettierten Trainingsdatensatz bildet, erhalten wird, als Trainingsdaten eines zweiten etikettierten Trainingsdatensatzes, der durch Verstärkung des ersten etikettierten Trainingsdatensatzes erhalten wird, wobei das Einzelkanalbild ein Bild ist, von dem die Pixelwerte in Übereinstimmung mit einer physikalischen Größe, die von Lichtempfangselementen während Bildgebung empfangen wird, bestimmt werden, oder ein Bild ist, von dem die Pixelwerte durch reversible Transformation an der physikalischen Größe bestimmt werden; und
eines Schritts des Erzeugens eines invertierten Etiketts, das dem invertierten Bild entspricht, als ein Ground-Truth-Etikett, das den zweiten etikettierten Trainingsdatensatz bildet, wobei das invertierte Etikett auf der Grundlage eines Ground-Truth-Etiketts des Einzelkanalbildes erzeugt wird, wobei das Ground-Truth-Etikett des Einzelkanalbildes den ersten etikettierten Trainingsdatensatz bildet.

12. Datenverarbeitungsverfahren nach Anspruch 11, wobei der Prozessor in einem Klassendesign des Ground-Truth-Etiketts, das den zweiten etikettierten Trainingsdatensatz bildet, Klassenersetzung als Reaktion auf Einstellen des invertierten Bildes als die Trainingsdaten durchführt.

13. Datenverarbeitungsverfahren nach Anspruch 12, wobei der Prozessor das Ground-Truth-Etikett invertiert, um das invertierte Etikett bei der Klassenersetzung zu erzeugen.

14. Datenverarbeitungsverfahren nach einem der Ansprüche 11 bis 13, wobei das Einzelkanalbild ein Bild ist, das keiner irreversiblen Transformation unterzogen worden ist.

15. Nicht flüchtiges computerlesbares Aufzeichnungsmedium, auf dem ein Programm zum Veranlassen eines Computers, das Datenverarbeitungsverfahren nach einem der Ansprüche 11 bis 14 auszuführen, aufgezeichnet ist.

## Revendications

1. Appareil de traitement de données comprenant :
un processeur configuré pour :
générer une image inversée obtenue en inversant des valeurs de pixels d'une image monocanal qui constitue un premier ensemble de données d'entraînement étiquetées, comme données d'entraînement d'un deuxième ensemble de données d'entraînement étiquetées obtenu par augmentation du premier ensemble de données d'entraînement étiquetées, l'image monocanal étant une image dont les valeurs de pixels sont déterminées en fonction d'une grandeur physique détectée par des éléments de réception de lumière pendant l'imagerie ou une image dont les valeurs de pixels sont déterminées par transformation réversible sur la grandeur physique ; et
générer une étiquette inversée correspondant à l'image inversée, comme étiquette de vérité terrain qui constitue le deuxième ensemble de données d'entraînement étiquetées, l'étiquette inversée étant générée sur la base d'une étiquette de vérité terrain de l'image monocanal, l'étiquette de vérité terrain de l'image monocanal constituant le premier ensemble de données d'entraînement étiquetées.

2. Appareil de traitement de données selon la revendication 1, dans lequel l'image monocanal est une image capturée par un réseau de détecteurs numériques (digital detector array, DDA) qui reçoit un rayonnement transmis à travers un sujet photographique ou une image capturée par radiographie informatisée (computed radiography, CR) obtenue en amenant un dispositif de lecture à sortir, sous forme de valeurs numériques, un signal de lumière reçue d'une plaque d'imagerie (imaging plate, IP).

3. Appareil de traitement de données selon la revendication 1 ou la revendication 2, dans lequel chaque pixel de l'image monocanal a une valeur numérique proportionnelle à une quantité de lumière reçue au niveau d'un élément de réception de lumière correspondant parmi les éléments de réception de lumière ou une valeur numérique corrélée à la quantité de lumière reçue.

4. Appareil de traitement de données selon l'une quelconque des revendications 1 à 3, dans lequel chaque pixel de l'image monocanal a une valeur numérique corrélée à la grandeur physique en un point correspondant d'un sujet photographique.

5. Appareil de traitement de données selon l'une quelconque des revendications 1 à 4, dans lequel le premier ensemble de données d'entraînement étiquetées est sélectionné de telle sorte que, dans un cas où le premier ensemble de données d'entraînement étiquetées est augmenté, l'étiquette inversée ne provoque aucune contradiction et/ou l'étiquette inversée est efficace pour l'apprentissage.

6. Appareil de traitement de données selon l'une quelconque des revendications 1 à 5,
dans lequel le processeur est configuré pour :
générer l'image inversée en inversant les valeurs de pixels d'une région partielle de l'image monocanal ; et
générer l'étiquette inversée comme étiquette de vérité terrain qui constitue le deuxième ensemble de données d'entraînement étiquetées, sur la base d'une étiquette de vérité terrain de l'image monocanal correspondant à la région partielle.

7. Appareil de traitement de données selon l'une quelconque des revendications 1 à 6, dans lequel le processeur est configuré pour modifier une conception de classe de l'étiquette de vérité terrain qui constitue le deuxième ensemble de données d'entraînement étiquetées en réponse à la définition de l'image inversée comme données d'entraînement.

8. Appareil de traitement de données selon la revendication 7, dans lequel le processeur effectue, dans la conception de classe, un remplacement de classe en réponse à la définition de l'image inversée comme données d'entraînement.

9. Appareil de traitement de données selon la revendication 8, dans lequel le processeur inverse l'étiquette de vérité terrain pour générer l'étiquette inversée dans le remplacement de classe.

10. Appareil de traitement de données selon l'une quelconque des revendications 1 à 9, dans lequel l'image monocanal est une image qui n'a pas subi de transformation irréversible.

11. Procédé de traitement de données comprenant :
effectuer, par un processeur,
une étape consistant à générer une image inversée obtenue en inversant des valeurs de pixels d'une image monocanal qui constitue un premier ensemble de données d'entraînement étiquetées, comme données d'entraînement d'un deuxième ensemble de données d'entraînement étiquetées obtenu par augmentation du premier ensemble de données d'entraînement étiquetées, l'image monocanal étant une image dont les valeurs de pixels sont déterminées en fonction d'une grandeur physique détectée par des éléments de réception de lumière pendant l'imagerie ou une image dont les valeurs de pixels sont déterminées par transformation réversible sur la grandeur physique ; et
une étape consistant à générer une étiquette inversée correspondant à l'image inversée, comme étiquette de vérité terrain qui constitue le deuxième ensemble de données d'entraînement étiquetées, l'étiquette inversée étant générée sur la base d'une étiquette de vérité terrain de l'image monocanal, l'étiquette de vérité terrain de l'image monocanal constituant le premier ensemble de données d'entraînement étiquetées.

12. Procédé de traitement de données selon la revendication 11, dans lequel le processeur effectue, dans une conception de classe de l'étiquette de vérité terrain qui constitue le deuxième ensemble de données d'entraînement étiquetées, un remplacement de classe en réponse à la définition de l'image inversée comme données d'entraînement.

13. Procédé de traitement de données selon la revendication 12, dans lequel le processeur inverse l'étiquette de vérité terrain pour générer l'étiquette inversée dans le remplacement de classe.

14. Procédé de traitement de données selon l'une quelconque des revendications 11 à 13, dans lequel l'image monocanal est une image qui n'a pas subi de transformation irréversible.

15. Support d'enregistrement non transitoire lisible par ordinateur sur lequel un programme pour amener un ordinateur à exécuter le procédé de traitement de données selon l'une quelconque des revendications 11 à 14 est enregistré.
